# EUROPEAN PATENT SPECIFICATION

(11) **EP 4 046 769 B1**
(45) Date of publication and mention of the grant of the patent: **18.06.2025**
(21) Application number: 22157710.9
(22) Date of filing: 21.02.2022
(51) Int. Cl.: B29B 17/02, B29B 17/04, B29C 63/00, B29C 70/54

(54) **METHOD FOR REMOVING PROTECTIVE FILMS FROM PREPREG COMPOSITE FABRICS IN AN UNTREATED STATE AND RELATED DEVICE**
VERFAHREN ZUM ENTFERNEN VON SCHUTZFILMEN VON VORIMPRÄGNIERTEN VERBUNDSTOFFEN IM UNBEHANDELTEN ZUSTAND UND ENTSPRECHENDE VORRICHTUNG
MÉTHODE POUR ENLEVER LES FILMS PROTECTEURS DES TISSUS COMPOSITES PRÉ-IMPRÉGNÉS DANS UN ÉTAT NON TRAITÉ ET DISPOSITIF ASSOCIÉ

(30) Priority: 22.02.2021 IT 202100004091
(43) Date of publication of application: 24.08.2022
(73) Proprietor: Alci S.r.l., 63100 Ascoli Piceno (IT)
(72) Inventor: ALESSI, Valerio, 63100 ASCOLI PICENO (IT); SPECCHI, Roberto, 63100 ASCOLI PICENO (IT); MARIOLI, Gianandrea, 63100 ASCOLI PICENO (IT)
(74) Representative: Mola, Edoardo

(56) References cited:
- WO-A2-94/07670
- DE-C1- 19 507 218
- FR-A1- 3 036 996
- US-A1- 2015 258 766

## Description

### Field of application of the invention

The present invention relates to the field of processing "pre-impregnated" fiber-reinforced composite materials having a polymeric matrix and a filler. More specifically, the present invention relates to a method for the mechanical recycling of scraps in the raw state deriving from processes of cutting templates of pre-impregnated fabrics of composite material (prepreg).

### State of the art

At the state of the art it is known that following a process of cutting prepreg materials, the amount of scraps that is produced is high. Up to now, said scraps have been treated as special waste and therefore have been disposed of with specific procedures, resulting in an increase in processing costs. Only recently have some methods emerged for the reuse of prepreg scraps but these methods involve the creation of a finished product in the form of a recomposed sheet, coming from an unpeeled and interposed between two protective films prepreg cut. Said sheet can only be used in lamination processes and not in molding and pyrolysis processes. In these last two types of processes, the presence of the prepreg film would lead to the formation of interface problems, generating detachments and / or delaminations.

Furthermore, a possible manual elimination of films would involve a high increase in costs and the request for employees assigned to this specific task.

Document FR3036996A1 describes a method for the preparation of one or more fragments of uncured composite material that allows to remove a protective film from the fragment / s by tangential jets to the prepreg kept flat. Such jets intend to peel the film while the prepreg is held in position by pressure rollers. The disadvantages of this approach are a relatively large size of the equipment that must extend in a substantially two-dimensional way since the prepreg must be positioned and held flat to identify the tangential position. Furthermore, the effectiveness is relatively poor since in the event of even small misalignments between the jet of air and the surface of the prepreg, the relative film is not detached. In greater detail, before the removal of the films, the fragment / s must be loaded onto a conveyor belt where care must be taken that the fragment / s does not overlap and that it is positioned so that the protective film contacts the belt conveyor. Finally, versatility is also relatively poor, since examples are shown for prepregs that are still large before being subsequently processed and it is complex to apply the same process in the presence of a plurality of prepreg 'chips' or scraps such as when it is necessary to recycle the scraps of a production process that has already taken place.

### Summary of the Invention

The basic idea of the present technical solution is to combine a cooling step of the composite material so that the polymer matrix loses tackiness, e.g. decreases its tack value, and subsequently or simultaneously undergoes an agitation action, performed in a peeling machine, to generate turbulence so as to promote separation of the film from the matrix. A repeated mechanical folding is shown but is not part of the claimed invention.

According to a preferred embodiment, the step of separating by agitation comprises the step of rotating a basket containing the two-dimensional elements. In this way, the peeling is encouraged by the continuous bumping and rubbing caused by the rotation of a basket.

According to the invention the step of separating by agitation comprises the step of agitating by means of a compressed gas directed towards the two-dimensional elements to generate turbulence, preferably a vortex. This has the advantage that the two-dimensional elements peel much more easily as the swirling motion, produced by the flow of a compressed gas, generates multiple impacts and rubs in each direction avoiding the drawback that the two-dimensional element is not peeled due to a jet directed in a tangential direction on each element.

According to a preferred embodiment during the separating step, the temperature to which the two-dimensional elements are brought is below 0° and is controlled.

Controlling the temperature implies that the two-dimensional element is able to maintain its temperature without being affected by the surrounding environment resulting in the risk of not being accurately peeled.

According to a preferred embodiment said step of controlling said temperature comprises the step of closing the peeling machine in a temperature controlled cooling device. In this way, the elements to be peeled are not affected by the temperature of the surrounding environment and are all able to peel equally.

According to a preferred embodiment, the step of controlling said temperature comprises the step of providing compressed gas with cooled temperature and controlling at least one between flow rate and temperature of said compressed gas.

This implies that the control can be achieved by different means, such as valves that change temperature or flow rate. A temperature sensor may be provided within the chamber in which the elements are peeled so as to provide data to a control unit which, suitably programmed, consequently controls the valves to appropriately change the flow rate and/or temperature of the cold gas.

The resulting recycled product can be reused for the production of components for:
- the automotive industry, such as brake discs or other ceramic materials to replace virgin carbon fiber,
- the production of personal protective equipment, such as shoe toe caps,
- the manufacture of aesthetic components of a vehicle such as reinforcement ribs for hoods and carbon look parts.

In addition, the invention also finds application in first-use applications of the composite material, for example when it is necessary to remove the protective film from portions cut from a sheet cut from a roll having a width of 600-1500 mm, which is carried out continuously on a cutting machine.

### Brief description of the figures

Further purposes and advantages of the present invention will be clear from the following detailed description of an example embodiment thereof (and its alternatives) and the appended drawings given by way of explanation only and not limitation, wherein:
- Fig. 1 shows in a flow chart the steps of the method according to the present invention;
- Fig. 2A shows in side view a cutting machine according to the present invention;
- Fig. 2B shows in a side view the cutting machine of Fig. 2A without the outer frame;
- Fig. 2C shows, in a further side view, the cutting machine of Fig. 2A;
- Fig. 2D shows the cutting machine of Fig. 2A from above;
- Fig. 2E shows the cutting machine of Fig. 2A in an axonometric view;

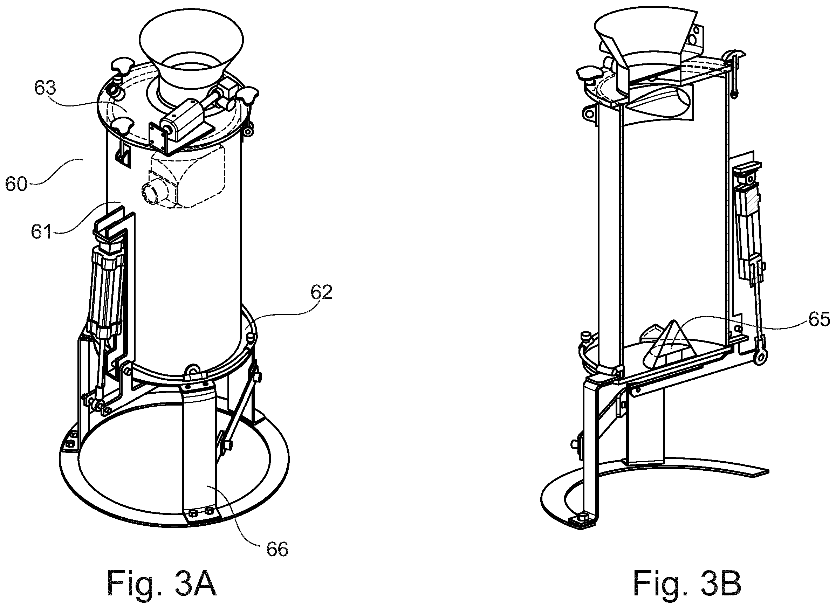

- Fig. 3A shows in axonometric view a peeling machine according to the present invention;
- Fig. 3B shows a sectioned axonometric view of the peeling machine of Fig. 3A;

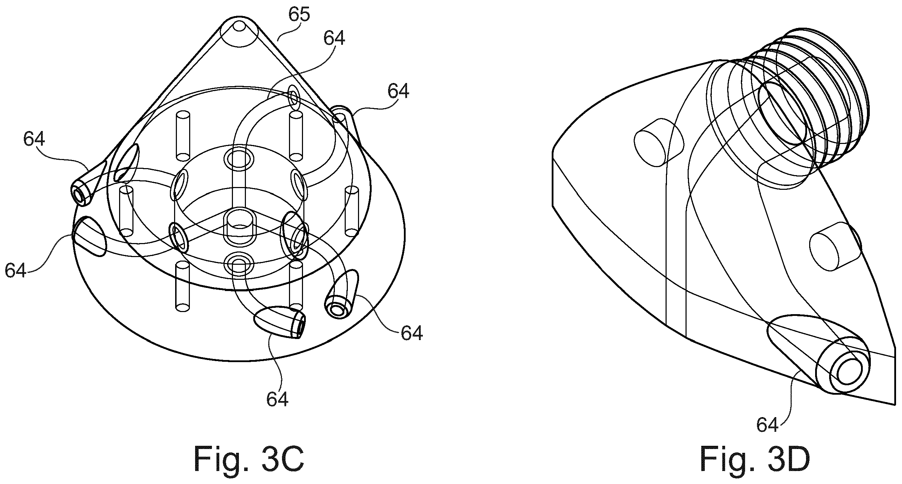

- Fig. 3C shows in perspective view a modular assembly of a central ogive and nozzles of the peeling machine of Fig. 3A;
- Fig. 3D shows in axonometric view the compressed air ejection nozzles of the peeling machine of Fig. 3A;
- Fig. 4 shows a perspective view of a peeling machine according to a further embodiment.

The same numbers and reference letters in the figures identify the same elements or components.
The elements and features illustrated in the various preferred embodiments, including the drawings, may be combined with each other without, however, departing from the scope of protection of the present application as described below.

### Detailed description of examples of realization

At the end of the cutting process of the prepreg sheets, the scraps can appear both connected and loose, sometimes even overlapping and with different shapes and sizes and equipped with a protective plastic film.

According to the method of the invention, first of all it is necessary to proceed with the on-site separation of the resin-free selvedge from the rest of the sheet, since the selvedge is a material that is not involved in the process of reusing the scraps and cannot be subsequently separated automatically. The selvedge will therefore constitute in all respects a waste and not reusable material.

In order to allow a correct processing, the scraps, obtained from a cutting operation of a prepreg sheet, are separated by type of reinforcement, fiber size, weight, texture, matrix and date of production, then bagged and labeled, so as to be easily identifiable.

The bags must then be stored at a temperature of -20°C until the moment to the delivery to the recovery center.

Thermosetting prepregs maintain their workability at room temperature, considering as room temperature a temperature of 20°C, for about 30 days, before the resin starts the cross-linking process. This is due to the fact that the speed of the crosslinking process of the polymer matrix increases with temperature.

Therefore, in order to store prepreg scraps for a longer period of time without the matrix starting the cross-linking process, they should be stored at a temperature lower than the glass transition temperature, which in this case is about -18°C. In this way the useful storage period is extended to about 12 months.

Therefore, for proper storage of the material, it is necessary to know the type of polymeric prepreg material in order to know the exact glass transition temperature so that it is stored in the correct manner.

The first step to address in material recycling is to separate the overlapping or agglomerated material and remove the film used for cutting.

In order to be used easily for each purpose described above, the prepreg scraps must have a shape with a side dimension in the range of 10 - 50 mm, preferably with a side less than 30 mm and even more preferably rectangular in size 22, 5x12mm. The processing machines inside the treatment cell are:
- prepreg cutting machine
- freezer
- peeler contained inside the freezer
- air suction and refrigeration system.

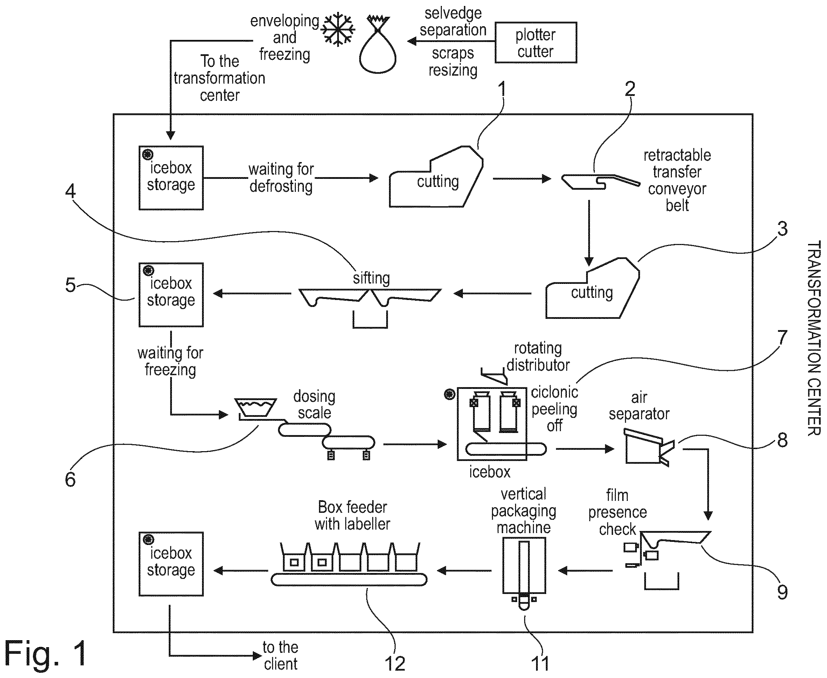

Referring preferably to the layout of FIG. **1****,** the steps of the method according to the present invention are:
STEP 1. the scraps coming from the storage plant, in which they are kept at a temperature below the glass transition temperature, after they have thawed, are placed inside a scraps cutting station inside which they are cut into cuttings, also called chips, of as regular shape as possible, circumscribed by a shape having a lateral dimension between 10 - 50 mm;
STEP 2: alignment of the cuts in an orthogonal position to the first cut on a conveyor belt;
STEP 3: execution of a second cut, orthogonal to the first one and obtaining chips of the desired dimensions (possible standard combinations 12 x 12 mm - 22.5 x 22.5 mm - 22.5 x12 mm and any multiples)
STEP 4: separation of small-sized chips through screening belts, the smaller-sized chips fall into a gap left between one belt and another;
STEP 5: freezing the chips;
STEP 6: dosage of the chips;
STEP 7: loading the chips into a peeling machine and adding talc;
STEP 8: passage through an air separator for the elimination of any detached but not aspirated films;
STEP 9: distribution on a conveyor belt and optical control to verify, by means of a color difference detection between chips and protective films **e.g.** through imaging algorithms, the presence of any non-peeled chips;
STEP 10 (not shown) removal of non-peeled chips, for example by means of a jet of air;
STEP 11: sending the peeled material to a vertical packaging machine;
STEP 12: packing and storage in the freezer until delivery to the final customer.

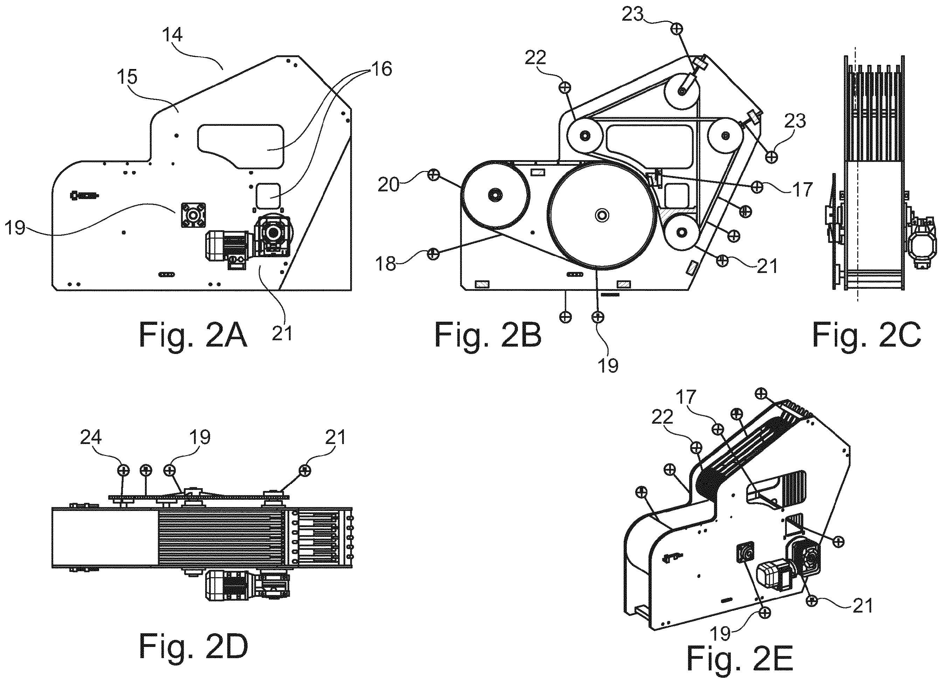

Going into the specifics of the various steps, taking into account Figures 2A-2E the cutting machine 13 comprises:
- a support frame 14 composed of sheets 15 on which side windows 16 are obtained to allow observation of the cutting process from the outside, identify malfunctions, allow removal of the cut chips and access to the blade block for their adjustment;
- two abutments spaced by crossbars with a rectangular section whose function is to strengthen the structure and prevent the two abutments from twisting;
- a system of blades 17 mounted on a crossbar and fixed on adjustable supports that allow to adjust their height with respect to the cutting surface.

The prepreg cuttings are fed into the blade system by means of a cutting belt 18 which is wound about two pulleys:
- a drive 19 on which the cutting of the prepreg will take place
- a driven pulley 20 on which the belt tension is adjusted. In order to ensure adhesion of the prepreg cuttings to the cutting belt 18, said cuttings will be pressed against said belt by a system of trapezoidal belts running on three pulleys and forming a closed circuit of triangular shape, wherein:
   - one pulley is multiple driving 21 with trapezoidal profile slots, on which all the belts are wound.
   - one pulley is multiple idler 22 with trapezoidal profiles
   - one pulley is single tensioning 23 for each belt forming two tensioning groups.

The entire system is driven by a motor-reducer assembly.

The transmission of the motion, to the multiple drive pulley 21 of the belt assembly, will occur directly through the motor shaft keyed to the reducer.

The synchronization is maintained by friction of the belts. According to a form of embodiment that allows redundancies, in order to synchronize the motion of the belts with that of the cutting belt 18, the motion to the driving pulley 19 of the belt will be transferred through a timing chain system with pinions and crown formed by: a motor pinion 24, two toothed pinions and a spoked toothed crown.

The drive pinion will be splined to the end of the shaft connected to the geared motor and on which the multiple drive pulley 21 of the belts is also splined. This shaft will then transfer the drive torque to the entire system.

The motion to the conveyor belt drive pulley will be provided by the spoked crown wheel, which is keyed to its axis.

The motion to the conveyor belt pulley will be given by the spoked ring gear, splined to its axis of rotation.

The gear ratio of the pinion-crown system is such that the tangential speed of the conveyor belt on the driving pulley is equal to the forward speed of the trapezoidal belts.

In this way the prepreg cuttings are guided towards the blade block 17 without slippage between their upper and lower surfaces, thus remaining tightly adhered to the belt, thus maximizing cutting efficiency and minimizing possible jams. At the exit of the cutting machine, cuttings are obtained whose width does not exceed the distance between centres of the blades and whose length is irregular. To obtain square-shaped chips measuring 30mm*30mm another cutting operation is carried out in the direction orthogonal to that of the first cut. The cuttings must therefore be aligned on the belt in such a way that the direction of their longest length is orthogonal to the direction of advancement of the cut. The cut is therefore made in two orthogonal directions, obtaining chips with a geometry within a quadrilateral.

Once the chips have passed the plurality of cutting blades, they fall by gravity and exit from the lower side of the machine.

Chips after being frozen, as per STEP 5, and dosed on scales, as per STEP 6, are led into a cooler where a pneumatic peeling machine 60 is placed. In this step a very important role is played by the temperature that must be kept below 0°C and preferably at values close to -18°C. In this way the stiffness of the chips is increased and it is easier to proceed with the peeling.

According to a preferred embodiment, STEP 5 takes place inside an industrial freezer of suitable capacity but alternatively, and without departing from the scope of protection of the present patent application, it is possible to use more generally any other cooling device intended such as a controlled temperature cell or a climatic chamber.

Said machine 60 uses the mechanical agitation of the material to proceed with the peeling without mistreating the fiber fabric and degrading its properties. Therefore, the flow rate of a compressed gas is used e.g. air as a means of handling.

The pneumatic peeling machine includes:
- a cylinder 61 with a diameter between 200-350, preferably between 250-280 **mm,** and a height of 600 mm as it is optimal for the suction of films and for easy positioning inside the freezer;
- an opening 62 hinged on one side so as to facilitate the fall of the treated material;
- a cylinder closure 63, preferably in transparent polycarbonate, to allow you to observe the process inside the machine;
- nozzles 64 for blowing the air inside the machine and placed at the base of the cylinder itself; the air outlet nozzle has an inclination of 3° upwards and 6° inwards with respect to the tangent to the cylinder in its correspondence. In this way the mixing of the chips is enhanced;
- an ogive 65 comprising two distinct pieces: a base and a top which can be mounted in two different configurations by rotating them by 60 **°.** An air flow can therefore be created at an angle of 70 ° with respect to the radial direction, with clockwise or counterclockwise rotation and therefore respectively in agreement or discordant with that imposed by the nozzles mounted on the wall.
- steel feet 66 on which the machine is mounted which allow the complete opening of the bottom for the material discharge.

Chips are inserted inside the peeling machine 60 and rapidly rotated by the action of the compressed air exiting the nozzles 64. In this way, it is not important the manner in which the chips are inserted since the peeling of the chips occurs by means of the impacts, caused by the swirling motion produced by the flow of a compressed gas, **e.g.** air, that each chips has with the other.

According to an embodiment not shown, the peeling machine 60 may provide for the presence of a rotating basket and therefore the peeling of the chips takes place both by means of agitation but also by rotation of a basket.

Further and without going beyond the scope of protection of the present patent application, liquid nitrogen or other gas supplied at a cooled temperature **e.g.** below 0° can be used as compressed gas alternatively to air.

In the case where liquid nitrogen is used as a compressed gas, temperature control could be by means of valves that by rolling can change the temperature of the nitrogen itself or alternatively change its flow rate. In addition, temperature could consist of using a sensor inserted into the stirring chamber to control temperature.

Rotation and aerodynamic forces separate the protective films from the prepreg causing the films to be pushed by the air towards the top of the tube where they are sucked up by means of a suction system consisting of a vacuum pump.

After several tests it has been verified that the optimal quantity of chips to be inserted into the peeler is 140/150 gr, with a maximum size of 50mm * 50mm and that 30/40 seconds are needed with an air pressure of 6-8 bar and a flow rate of 40 liters/sec to peel the film properly. The vacuum cleaner, on the other hand, has a flow rate of 60 liters/sec. The high volume of air sucked in, with the consequent recall of warmer air from outside, could cause a temperature variation inside the peeling machine. In order to limit this problem as much as possible, the external air adduction duct is connected to a plate heat exchanger, inside which the air follows an obligatory path to reduce its temperature to acceptable values for the execution of the process.

During the same peeling step it is possible to add talcum powder or other lubricating and/or inert material in powder form to the chips, thus eliminating the need for a subsequent talcum powder station. The talcum powder is uniformly distributed on the peeled prepreg by the compressed air vortex.

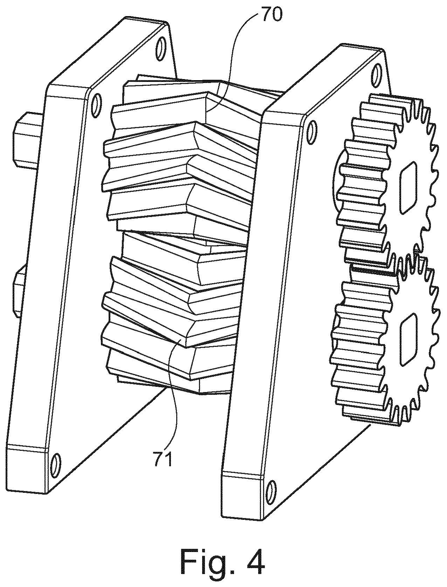

Figure 4 shows a non claimed embodiment of a device for removing the protective film suitable for relatively large sizes of the element from which the film is to be removed. It should be noted that the mode by means of compressed air is particularly suitable for prepreg elements with a maximum characteristic size, e.g., diameter or larger side, of about half the maximum transverse dimension of the cylinder 61, which may also have another shape. In particular, the device comprises at least one pair of synchronized gearing shaped rollers having a suitable gap for the purpose of receiving at least one previously cooled chip. Automatically induced folds in the chips as they pass through the interstice while the rollers are rotating, delaminate i.e. separate the film from the die. According to the non-limiting embodiment illustrated in the figure, the shaped rollers include a pair of gear wheels 70, 71 in contact with the chips during peeling.

## Claims

1. Method for treating a composite material having a polymer matrix and a filler comprising the following steps:
- receiving two-dimensional elements of composite material covered with a protective film
- bringing said two-dimensional elements to a temperature below 0 °C to approach or exceed a glass transition temperature of the polymer matrix
- at least partially separating the protective films from said two-dimensional cooled elements by agitation performed into a peeling machine (60) of the two-dimensional elements, wherein the step of separating by agitation comprises the step of agitating by means of a compressed gas directed towards the two-dimensional elements to generate a turbulence, preferably a vortex, to cause peeling by means of impacts of the two-dimensional elements; and
- aspirating, by means of a forced suction system, the removed films, which have a mass lower than the corresponding two-dimensional elements.

2. Method according to claim 1, wherein the step of separating by agitation comprises the step of rotating a basket containing the two-dimensional elements.

3. Method according to claim 1, **characterized in that** a first flow rate of compressed gas is lower than a suction flow rate of the step of aspirating so as to create a depression during the removal of the protective films.

4. Method according to any one of the preceding claims, wherein the step of separating comprises a step of controlling said temperature below 0° C.

5. Method according to claim 5, wherein said step of controlling said temperature comprises the step of closing the peeling machine (60) in a temperature-controlled cooling device.

6. Method according to claims 3 and 5, wherein the step of controlling said temperature comprises the step of supplying the compressed gas with cooled temperature and controlling at least one of the flow rate and temperature of said compressed gas.

7. Method according to any one of the preceding claims, **characterized in that** comprising the step of adding a quantity of a lubricating and / or inert material in powder, preferably based on talc, to hinder agglomerations of elements after the removal of the films.

8. Method according to any one of the preceding claims, comprising a step of checking through an optical device after the step of removing to identify any films still adhering to the matrix.

9. Method according to any one of the preceding claims, wherein the step of receiving is preceded by a step of cutting the composite material by means of side-by-side blades (17) defining a transversal spacing and of at least one flexible element (18) driven in rotation and tensioned to press against the composite material in the spacing during the action of the blades (17).

## Patentansprüche

1. Verfahren zur Behandlung eines Verbundmaterials mit einer Polymermatrix und Füllstoff, umfassend die folgenden Schritte:
- Empfang von zweidimensionalen Elementen aus Verbundmaterial, die mit einer Schutzfolie überzogen sind;
- Erhitzen der zweidimensionalen Elemente auf eine Temperatur unter 0 °C, um die Glasübergangstemperatur der Polymermatrix zu erreichen oder zu überschreiten;
- zumindest teilweises Abtrennen der Schutzfolien von den gekühlten zweidimensionalen Elementen durch Rühren in einer Schälmaschine (60) für zweidimensionale Elemente, wobei der Schritt des Abtrennens durch Rühren den Schritt des Rührens mittels eines Druckgases in Richtung der zweidimensionalen Elemente umfasst, um Turbulenzen, vorzugsweise einen Wirbel, zu erzeugen, um ein Ablösen durch Stöße der zweidimensionalen Elemente zu bewirken, und
- Absaugen der entfernten Filme, deren Masse geringer ist als die der entsprechenden zweidimensionalen Elemente, mittels eines Zwangssaugsystems.

2. Verfahren nach Anspruch 1, wobei der Schritt des Trennens durch Rühren den Schritt des Drehens eines Korbs umfasst, der die zweidimensionalen Elemente enthält.

3. Verfahren nach Anspruch 1, **dadurch gekennzeichnet, dass** eine erste Durchflussrate des Druckgases niedriger ist als eine Saugdurchflussrate des Saugschritts, um beim Entfernen der Schutzfolien einen Unterdruck zu erzeugen.

4. Verfahren nach einem der vorhergehenden Ansprüche, wobei der Trennschritt einen Schritt zur Kontrolle der Temperatur unter 0°C umfasst.

5. Verfahren nach Anspruch 5, wobei der Schritt des Steuerns der Temperatur den Schritt des Schließens der Schälmaschine (60) in eine temperaturgeregelte Kühlvorrichtung umfasst.

6. Verfahren nach den Ansprüchen 3 und 5, wobei der Schritt des Steuerns der Temperatur den Schritt der Zufuhr von Druckgas bei gekühlter Temperatur und des Steuerns von zumindest der Strömungsrate und der Temperatur des Druckgases umfasst.

7. Verfahren nach einem der vorhergehenden Ansprüche, **dadurch gekennzeichnet, dass** es den Schritt des Hinzufügens einer Menge eines schmierenden und/oder inerten Pulvermaterials, vorzugsweise auf Talkbasis, umfasst, um eine Agglomeration der Elemente nach dem Entfernen der Folien zu verhindern.

8. Verfahren nach einem der vorhergehenden Ansprüche, umfassend einen Schritt zur Überprüfung durch eine optische Vorrichtung nach dem Entfernungsschritt, um alle Folien zu identifizieren, die noch an der Matrix haften.

9. Verfahren nach einem der vorhergehenden Ansprüche, wobei dem Aufnahmeschritt ein Schritt des Schneidens des Verbundmaterials mit Hilfe von nebeneinander angeordneten Klingen (17), die einen Querabstand definieren, und mit mindestens einem flexiblen Element (18) vorausgeht, das rotierend angetrieben und gespannt wird, um unter der Einwirkung der Klingen (17) in diesem Abstand gegen das Verbundmaterial zu drücken.

## Revendications

1. Procédé de traitement d'un matériau composite à matrice polymère et charge, comprenant les étapes suivantes :
- réception d'éléments bidimensionnels en matériau composite recouverts d'un film protecteur ;
- chauffage desdits éléments bidimensionnels à une température inférieure à 0 °C pour approcher ou dépasser la température de transition vitreuse de la matrice polymère ;
- séparation au moins partielle des films protecteurs desdits éléments bidimensionnels refroidis par agitation dans une machine à peler (60) les éléments bidimensionnels, dans lequel l'étape de séparation par agitation comprend l'étape d'agitation au moyen d'un gaz comprimé vers les éléments bidimensionnels pour générer une turbulence, de préférence un vortex, pour provoquer un pelage par les impacts des éléments bidimensionnels, et
- aspiration, au moyen d'un système d'aspiration forcée, des films retirés dont la masse est inférieure à celle des éléments bidimensionnels correspondants.

2. Procédé selon la revendication 1, dans lequel l'étape de séparation par agitation comprend l'étape de rotation d'un panier contenant les éléments bidimensionnels.

3. Procédé selon la revendication 1, **caractérisé en ce qu'**un premier débit de gaz comprimé est inférieur à un débit d'aspiration de l'étape d'aspiration, de manière à créer une dépression lors du retrait des films protecteurs.

4. Procédé selon l'une quelconque des revendications précédentes, dans lequel l'étape de séparation comprend une étape de contrôle de ladite température en dessous de 0 °C.

5. Procédé selon la revendication 5, dans lequel ladite étape de contrôle de ladite température comprend l'étape de fermeture de la machine de pelage (60) dans un dispositif de refroidissement à température contrôlée.

6. Procédé selon les revendications 3 et 5, dans lequel l'étape de contrôle de ladite température comprend l'étape d'alimentation en gaz comprimé à température refroidie et le contrôle d'au moins le débit et la température dudit gaz comprimé.

7. Procédé selon l'une quelconque des revendications précédentes, **caractérisé en ce qu'**il comprend l'étape d'ajout d'une quantité d'un matériau lubrifiant et/ou inerte en poudre, de préférence à base de talc, pour empêcher l'agglomération des éléments après le retrait des films.

8. Procédé selon l'une quelconque des revendications précédentes, comprenant une étape de vérification par dispositif optique après l'étape de retrait afin d'identifier d'éventuels films encore adhérents à la matrice.

9. Procédé selon l'une quelconque des revendications précédentes, dans lequel l'étape de réception est précédée d'une étape de découpe du matériau composite au moyen de lames (17) côte à côte définissant un espacement transversal et d'au moins un élément flexible (18) entraîné en rotation et tendu pour appuyer contre le matériau composite dans cet espacement sous l'action des lames (17).
